# FASCICULE DE BREVET EUROPEEN

(11) **EP 3 441 270 B1**
(45) Date de publication et mention de la délivrance du brevet: **12.08.2020**
(21) Numéro de dépôt: 18185643.6
(22) Date de dépôt: 26.07.2018
(51) Int. Cl.: B60S 1/48

(54) **SYSTEME DE NETTOYAGE D'UNE SURFACE VITREE DE VEHICULE**
REINIGUNGSSYSTEM EINER FAHRZEUG-GLASOBERFLÄCHE
SYSTEM FOR CLEANING A GLAZED VEHICLE SURFACE

(30) Priorité: 09.08.2017 FR 1757612
(43) Date de publication de la demande: 13.02.2019
(73) Titulaire: Valeo Systèmes d'Essuyage, 78322 Le Mesnil Saint Denis (FR)
(72) Inventeur: GIRAUD, Frédéric, 78322 LE MESNIL SAINT DENIS (FR); LE LIGNE, Christophe, 78322 LE MESNIL SAINT DENIS (FR)
(74) Mandataire: Valeo Vision

(56) Documents cités:
- EP-A1- 3 153 360
- DE-A1- 10 115 975
- US-B1- 6 257 500

## Description

L'invention se rapporte au domaine des systèmes de nettoyage équipant les véhicules automobiles. Elle concerne plus particulièrement le domaine des systèmes de nettoyage d'une surface vitrée de tels véhicules.

Le document US 6 257 500 est considéré comme l'état de la technique le plus proche de l'objet de la revendication 1.

Le document US2012/266926 décrit une architecture d'un système de nettoyage comportant une pluralité de dispositifs de projection d'un produit nettoyant. Ces dispositifs de projection sont disposés en face avant et/ou en face arrière et/ou sur un rétroviseur du véhicule pour permettre le nettoyage d'une surface vitrée associée.

Dans de tels systèmes de nettoyage, des premiers dispositifs de projection peuvent être actionnés par une commande manuelle déclenchée par un utilisateur du véhicule et des deuxièmes dispositifs de projection peuvent être actionnés par une commande automatique déclenchée par un dispositif d'aide à la conduite et/ou à la manœuvre de ce véhicule. Les surfaces vitrées associées aux premiers dispositifs de projection correspondent, par exemple, au pare-brise et à la lunette arrière du véhicule, alors que les surfaces vitrées associées aux deuxièmes dispositifs de projection correspondent, par exemple, aux surfaces optiques de capteurs destinés à l'aide à la conduite et/ou à la manœuvre du véhicule.

Pour alimenter en produit nettoyant ces dispositifs de projection, l'architecture du système de nettoyage du document cité comporte un réservoir et une pompe reliés à chacun de ces dispositifs de projection via une électrovanne principale dérivant le produit nettoyant fourni par la pompe vers des conduites respectivement associées à chacun des dispositifs de projection du véhicule. Ainsi, dans cette architecture, les dispositifs de projection sont alimentés par la pompe du système de nettoyage distinctement les uns des autres, le pilotage de l'électrovanne dirigeant le produit nettoyant pompée du réservoir vers l'une ou l'autre des conduites

Lorsqu'un système de nettoyage du véhicule comporte un grand nombre de dispositifs de projection alimentés par une même pompe, le nombre de conduites à prévoir pour relier hydrauliquement l'ensemble des dispositifs de projection est important et peut être problématique, en termes de complexité de montage et de coût. Chacune des conduites hydrauliques représente par exemple un coût au mètre pondérant fortement le coût global du système de nettoyage.

Par ailleurs, chacun des dispositifs de projection doit être relié électriquement à une unité électronique principale pour la commande de la fonction de nettoyage, et par exemple le déclenchement de la fonction de nettoyage et/ou la mise en œuvre d'un déploiement du projecteur pour réaliser cette fonction de nettoyage. Là encore, pour permettre de relier électriquement chacun des dispositifs de projection à l'unité électronique principale, il est nécessaire de prévoir un système de nettoyage comportant un grand nombre de câbles et de connectiques électriques. Un agencement dans lequel un câble est tiré entre l'unité électronique principale et chacun des dispositifs de projection représente là encore un coût au mètre déterminant le coût global du système de nettoyage.

Dans un contexte de développement des véhicules, et par exemple les véhicules autonomes, où le nombre de capteurs est amené à être de plus en plus important sur le pourtour du véhicule, on comprend que ces inconvénients doivent être considérés.

La présente invention a pour but de pallier à au moins l'un des inconvénients précités et de proposer un système de nettoyage équipant un véhicule et permettant de réduire son coût de fabrication tout en simplifiant son montage dans le véhicule.

A cet effet, l'invention a pour objet un système de nettoyage d'au moins une surface vitrée de véhicule, comprenant au moins deux dispositifs de projection d'un produit nettoyant sur une surface vitrée associée. Selon l'invention, les dispositifs de projection comportent chacun un module électronique de commande configuré pour piloter le fonctionnement du dispositif de projection correspondant en fonction d'instructions de commande, et le système de nettoyage comporte un bus de courant porteur en ligne commun aux au moins deux dispositifs de projection, qui sont reliés électriquement au bus de courant porteur en ligne indépendamment l'un de l'autre et dans des zones successives dudit bus de courant porteur en ligne.

On comprendra par :
- « bus de courant porteur en ligne », un bus de commande électrique relié à une source d'alimentation électrique du véhicule et utilisant la technologie CPL (ou PLC pour Power-line communication), qui consiste à configurer la fréquence du courant traversant le bus de commande électrique pour transmettre ou échanger des données,
- « produit nettoyant », un produit liquide ou gazeux pouvant être projeté sur une surface vitrée en vue du nettoyage de celle-ci, un tel produit pouvant être indifféremment dans la présente invention de l'eau, du liquide de nettoyage lave-glace, ou encore de l'air,
- « surface vitrée », une surface transparente pouvant être d'une part une des vitres de l'habitacle du véhicule et notamment un pare-brise ou une lunette arrière, ou d'autre part une surface optique d'un système de détection optique équipant le véhicule ; notamment, on peut prévoir que la surface vitrée soit réalisée en verre ou bien en un plastique transparent de type Plexiglas.

Grâce au système de nettoyage selon l'invention, il est possible de réduire sensiblement le coût global de l'implantation dans le véhicule d'un tel système de nettoyage. En effet, contrairement à l'architecture de systèmes de nettoyage connus, il n'est utilisé qu'un circuit d'alimentation et de commande pour alimenter et commander chacun des dispositifs de projection équipant le véhicule, ledit circuit d'alimentation et de commande formant de la sorte un bus de commande électrique sur lequel les dispositifs de projection viennent récupérer le courant et les informations nécessaires au fonctionnement du nettoyage. Le bus de commande électrique est avantageusement un bus de courant porteur en ligne correspondant à une source d'alimentation pour commander. Ces dispositifs de projection sont chacun reliés électriquement à ce même bus de courant porteur en ligne le long de celui-ci de sorte que chacun de ces dispositifs de projection peut être alimenté et commandé par le bus de courant porteur en ligne indépendamment l'un de l'autre. On comprend que le système de nettoyage selon l'invention est d'autant plus intéressant qu'il comporte un grand nombre de dispositifs de projection, raccordés respectivement sur un même bus de commande électrique, à distance les uns des autres le long de ce bus circulant le long du véhicule.

De la sorte, il est notable selon l'invention que l'on simplifie grandement les circuits électriques d'un système de nettoyage équipant un véhicule. En effet, selon l'invention, le bus de courant porteur en ligne joue le rôle de bus d'alimentation et de commande, en parcourant le véhicule pour alimenter électriquement chacun de ces dispositifs de projection équipant le véhicule. La dimension et l'encombrement des fils nécessaires pour relier spécifiquement le bus de commande électrique à chaque dispositif de projection sont faibles et les contraintes de fixation du circuit électrique dans le véhicule portent ainsi surtout sur le bus de courant porteur en ligne, mutualisé pour chaque dispositif de projection.

Par ailleurs, les câbles électriques sont régulièrement fixés sur des éléments de structure du véhicule par des attaches, que ce soit le long ou à travers de parois délimitant l'habitacle par exemple, et on comprend que la diminution de la longueur totale des câbles électriques permet de diminuer le nombre de ces attaches, et donc le coût des pièces à prévoir pour l'installation du système de nettoyage dans le véhicule et le temps nécessaire pour le montage de ce système.

Selon une caractéristique de l'invention, au moins un des dispositifs de projection est relié électriquement au bus de courant porteur en ligne par l'intermédiaire d'un organe de raccordement électrique agencé sur ledit bus. On comprend que les organes de raccordement, respectivement présents dans une des zones successives du bus de courant porteur en ligne, sont agencés à distance les uns des autres.

Selon une autre caractéristique de l'invention, chacun des dispositifs de projection comprend une borne de connexion électrique configurée pour être reliée d'une part à un des organes de raccordement électrique agencés sur le bus de courant porteur en ligne et d'autre part au module électronique de commande.

La borne de connexion électrique peut comporter deux broches d'alimentation électrique. Ces deux broches d'alimentation sont configurées pour faire passer le courant et les instructions de commande associées depuis le bus de courant porteur en ligne vers le dispositif de projection et son module électronique de commande. Préférentiellement, le dispositif de projection et son électronique de commande sont alimentés par une tension de 12V.

Le bus de courant porteur en ligne comprend un pôle positif correspondant à une tension positive, préférentiellement égale à 12 V et un pôle nul correspondant à une masse, chaque pôle étant relié à une des broches de la borne de connexion électrique d'un dispositif de projection. Selon une caractéristique de l'invention, le système de nettoyage comporte des paires de fils électriques dans lesquelles chaque fil relie respectivement une broche d'une des bornes de connexion et l'un des organes de raccordement électrique.

Selon une caractéristique de l'invention, le module électronique de commande est configuré pour analyser l'ensemble des instructions de commande passant par le bus de courant porteur en ligne et pour récupérer dans cet ensemble la ou les instructions de commande correspondant à son dispositif de projection.

Selon une caractéristique de l'invention, chacun des dispositifs de projection comprend une électrovanne et un gicleur, ladite électrovanne étant pilotée par le module électronique de commande.

Lorsqu'un ordre de commande automatique en nettoyage est reçu par le module électronique de commande via le bus de courant porteur en ligne, le module électronique de commande transmet et/ou génère l'instruction de commande de l'électrovanne pour autoriser le passage du produit nettoyant depuis le bus de distribution hydraulique vers le gicleur, et le cas échéant pour autoriser le déplacement du gicleur, pour projeter le produit nettoyant sur la surface vitrée qui lui est associée.

Le gicleur peut être de type fixe ou bien télescopique. En d'autres termes, le dispositif de projection est configuré pour que la ou les buses de projection du produit nettoyant gardent une position fixe pendant et entre les opérations de nettoyage, ou bien que ces buses de projection soient montées sur un corps télescopique susceptible de prendre une position de nettoyage en regard de la surface vitrée à nettoyer et une position escamotée.

Selon une caractéristique de l'invention, au moins un des dispositifs de projection est associé à un système de détection optique et le dispositif de protection et le système de détection optique associé sont logés dans un boîtier commun.

Un tel système de détection optique peut être un capteur optique du type caméra vidéo ou encore scanner laser, nécessaire pour permettre le fonctionnement d'un dispositif d'aide à la conduite et/ou à la manœuvre du véhicule. La surface vitrée de ces capteurs est alors une surface optique formée par un verre de protection exposé aux intempéries.

Le bus de courant porteur en ligne et le bus de distribution hydraulique peuvent être flexible. En d'autres termes, ces bus peuvent être réalisés dans une matière élastique.

Selon une caractéristique de l'invention, le système de nettoyage comprend un bus de distribution hydraulique apte à permettre la circulation du produit nettoyant, les au moins deux dispositifs de projection étant reliés hydrauliquement au bus de distribution hydraulique indépendamment l'un de l'autre. Par « bus de distribution hydraulique », on comprend un conduit permettant l'acheminement du produit nettoyant.

Dès lors, il est possible de réduire encore davantage le coût global de l'implantation dans le véhicule d'un tel système de nettoyage. En effet, contrairement à l'architecture de systèmes de nettoyage connus, il n'est utilisé qu'un bus de distribution hydraulique pour alimenter hydrauliquement une pluralité de dispositifs de projection équipant le véhicule. Ces dispositifs de projection sont chacun reliés hydrauliquement à ce même bus de distribution hydraulique le long de celui-ci de sorte que chacun de ces dispositifs de projection peut être desservi en produit nettoyant par le bus de distribution hydraulique indépendamment l'un de l'autre.

Par ailleurs, il est possible de simplifier les circuits hydrauliques d'un système de nettoyage équipant un véhicule. Le bus de distribution hydraulique peut parcourir un véhicule pour alimenter hydrauliquement chacun de ces dispositifs de projection équipant le véhicule. Ceci permet avantageusement d'optimiser l'espace dans un véhicule dédié aux circuits hydrauliques pour de tels systèmes de nettoyage. En pratique, le bus de distribution hydraulique est régulièrement fixé sur le véhicule par des attaches. Ces attaches peuvent être communes au bus de courant porteur en ligne.

Dans ce contexte, il est possible de simplifier l'implantation des circuits électriques d'un système de nettoyage équipant un véhicule. Pour cela, le bus de courant porteur en ligne peut suivre le chemin du bus de distribution hydraulique parcourant le véhicule pour alimenter électriquement et commander chacun de ces dispositifs de projection équipant le véhicule. Ceci permet avantageusement d'optimiser l'espace dans un véhicule dédié aux circuits électriques pour de tels systèmes de nettoyage.

Selon une caractéristique particulière de l'invention, le système de nettoyage comprend un unique bus de courant porteur en ligne et un unique bus de distribution hydraulique. On simplifie alors encore davantage les différents circuits d'un système de nettoyage équipant un véhicule.

Selon un mode de réalisation de l'invention, le bus de distribution hydraulique forme un circuit hydraulique ouvert. En d'autres termes, le produit nettoyant circulant dans le bus de distribution hydraulique est à une pression sensiblement différente entre une première extrémité du bus de distribution hydraulique reliée à une sortie de la pompe et une deuxième extrémité du bus de distribution hydraulique fermée et opposée à la première extrémité, ceci lorsque tous les dispositifs de projection reliés à ce bus de distribution hydraulique sont actionnés.

On pourra envisager que le bus de distribution hydraulique forme un circuit hydraulique fermé. En d'autres termes, le produit nettoyant circule dans une boucle fermée et présente de la sorte une pression quasi constante en entrée et en sortie du bus de distribution hydraulique, ceci lorsque tous les dispositifs de projection reliés à ce bus de distribution hydraulique sont actionnés.

Selon une caractéristique de l'invention, le système de nettoyage comprend une pompe apte à alimenter le bus de distribution hydraulique en produit nettoyant. Notamment, la pompe peut alimenter le bus de distribution hydraulique en puisant du produit nettoyant dans un réservoir de stockage de ce produit. Lorsque le bus de distribution hydraulique forme un circuit hydraulique fermé, une première extrémité du bus de distribution hydraulique est reliée à une sortie de la pompe et une deuxième extrémité du bus de distribution hydraulique opposée à la première extrémité est reliée à une entrée de la pompe.

Selon une caractéristique de l'invention, le bus de distribution hydraulique comprend au moins deux portions agencées de part et d'autre d'une paroi et reliées l'une à l'autre par un connecteur hydraulique. Ce mode de réalisation permet de relier hydrauliquement deux portions du bus de distribution hydraulique s'étendant le long du véhicule et formant selon l'invention le conduit principal de distribution, ces deux portions étant séparées par une paroi du véhicule. Le connecteur hydraulique peut être monté dans une ouverture formée dans cette paroi. Une telle paroi peut être métallique ou plastique et correspond à une paroi sur le chemin de distribution du bus de distribution hydraulique parcourant le véhicule pour desservir les dispositifs de projection.

Une extrémité de chaque portion du bus de distribution hydraulique destinée à être raccordée l'une à l'autre peut porter un port de connexion hydraulique pour son raccordement au connecteur hydraulique.

Dans ce contexte de bus de distribution hydraulique, les au moins deux dispositifs de projection peuvent notamment être reliés à une même portion du bus de distribution hydraulique, ou être reliés respectivement à des portions différentes du bus de distribution hydraulique. Notamment, on pourra prévoir que les dispositifs de distribution sont agencés de sorte que chaque portion du bus de distribution hydraulique dessert au moins deux dispositifs de distribution.

Selon des caractéristiques de l'invention, au moins un des dispositifs de projection comprend des organes de raccordement hydraulique sur le bus de distribution hydraulique. En d'autres termes, chacun des dispositifs de projection est relié au bus de distribution hydraulique par un organe de raccordement hydraulique. Et, de façon complémentaire, au moins un des dispositifs de projection comprend des organes de maintien mécanique sur le bus de distribution hydraulique.

Ces organes de raccordement hydraulique peuvent être formés par des seringues prévues pour percer le bus de distribution hydraulique.

Selon une caractéristique de l'invention, l'organe de raccordement hydraulique et l'organe de maintien mécanique de chacun des dispositifs de projection peuvent être portés par l'électrovanne. Une telle électrovanne peut être avantageusement reliée mécaniquement et hydrauliquement au bus de distribution hydraulique dans une même opération d'assemblage.

De façon particulière, l'organe de raccordement hydraulique et l'organe de maintien mécanique de chacun des dispositifs de projection peuvent être portés par le boîtier. Le boîtier préalablement équipé du dispositif de projection et du système de détection optique peut alors être relié mécaniquement et hydrauliquement au bus de distribution hydraulique. Le boîtier forme alors une interface de connexion mécanique et hydraulique entre le bus de distribution hydraulique et le dispositif de projection correspondant.

Selon une caractéristique de l'invention, le bus de courant porteur en ligne et le bus de distribution hydraulique forment un même bus de distribution électrique et hydraulique des dispositifs de projection. Sur ce bus de distribution électrique et hydraulique viennent se connecter distinctement les uns des autres les dispositifs de projection. En d'autres termes, le bus de commande électrique est formé conjointement avec le bus de distribution hydraulique.

Grâce à ce mode de réalisation particulier, il est possible de simplifier l'assemblage du système de nettoyage dans le véhicule. Ainsi, les dispositifs de projection peuvent être reliés hydrauliquement et électriquement depuis une partie commune du bus de distribution.

Le bus de distribution électrique et hydraulique peut notamment être flexible. En d'autres termes, le bus de distribution électrique et hydraulique peut être réalisé dans une matière élastique.

Selon une caractéristique de l'invention, le bus de distribution électrique et hydraulique comporte un tube extrudé présentant au centre du tube un canal central à l'intérieur duquel est susceptible de circuler le produit nettoyant et présentant sur la périphérie du tube des conduites à l'intérieur desquelles sont susceptibles de circuler chacun des brins d'alimentation du bus de courant porteur en ligne.

Selon une autre caractéristique de l'invention, le bus de distribution électrique et hydraulique comporte un tube à l'intérieur duquel est susceptible de circuler le produit nettoyant et l'intérieur duquel s'étend également le bus de courant porteur en ligne. Le bus de courant porteur en ligne peut jouer le rôle d'un fil résistif pour élever la température du produit nettoyant à projeter, notamment dans des conditions de grand froid. A titre d'exemple, le bus de courant porteur en ligne peut traverser le bus de distribution hydraulique en son centre. On comprendra alors que le bus de distribution hydraulique est annulaire pour recevoir en son centre le bus de courant porteur en ligne. En d'autres termes, le bus de distribution hydraulique et le bus de courant porteur en ligne sont coaxiaux l'un par rapport à l'autre.

Le bus de courant porteur en ligne peut être surmoulé sur le conduit délimitant le bus de distribution hydraulique.

Selon une caractéristique de l'invention, le bus de distribution électrique et hydraulique comprend au moins deux portions reliées l'une à l'autre par un connecteur hydraulique et électrique. Ce mode de réalisation particulier permet de relier électriquement et hydrauliquement deux portions du bus de distribution séparées par une paroi du véhicule, par exemple une paroi délimitant l'habitacle et le compartiment moteur. Le connecteur électrique et hydraulique peut être monté dans une ouverture formée dans cette paroi.

Avantageusement, une extrémité de chaque portion du bus de distribution électrique et hydraulique destinée à être raccordée l'une à l'autre porte un port de connexion électrique et hydraulique pour son raccordement au connecteur électrique et hydraulique.

Selon d'autres caractéristiques de l'invention, il peut être prévu qu'au moins un premier dispositif de projection soit destiné à nettoyer une surface optique d'un capteur servant à une analyse automatique de la scène de route, c'est-à-dire une analyse par l'électronique du véhicule pour notamment le pilotage d'un dispositif d'aide à la conduite et/ou à la manœuvre de ce véhicule, et qu'au moins un deuxième dispositif de projection soit destiné à nettoyer une surface vitrée de l'habitacle ou une surface optique d'un capteur servant uniquement à l'analyse directe par le conducteur du véhicule. Dans ce cas, il est avantageux que le bus de distribution hydraulique soit agencé de sorte que l'au moins un deuxième dispositif de projection soit disposé sur le bus de distribution hydraulique, commun à chacun des dispositifs de projection, pour être plus éloigné d'une sortie de la pompe alimentant ce bus de distribution hydraulique que ne l'est l'au moins un premier dispositif de projection.

En effet, notamment lorsque le bus de distribution hydraulique commun à tous les dispositifs de projection est un circuit ouvert, on comprend que le produit nettoyant circulant au niveau de l'extrémité de ce circuit ouvert la plus éloignée de la pompe peut présenter une pression moins grande que celle du produit nettoyant circulant en sortie de pompe. Or, il importe que les systèmes de détection optique associés à des systèmes d'aide à la conduite soient immaculés afin d'éviter une mauvaise analyse de la scène de route détectée par l'électronique embarquée du véhicule alors que si le conducteur analyse par lui-même l'image détectée de la scène de route, il est plus à même d'analyser l'image partiellement entachée sans faire de faute de jugement. Dès lors, on peut avantageusement placer le deuxième dispositif de projection sur une portion du bus de distribution hydraulique où la pression est moins grande, le risque potentiel d'un nettoyage non optimal étant moins impactant. Par ailleurs, en priorisant ainsi l'alimentation hydraulique en produit nettoyant pour des premier et deuxième dispositifs de projection, c'est-à-dire en les plaçant de sorte qu'ils soient atteints plus ou moins vite par le produit nettoyant en sortie de pompe, il est possible d'éviter qu'une action non essentielle de nettoyage pénalise le déclenchement ou l'efficacité d'une action essentielle pour le traitement automatique des informations en provenance des systèmes de détection optique.

D'autres caractéristiques, détails et avantages de l'invention ressortiront plus clairement à la lecture de la description donnée ci-après à titre indicatif en relation avec des dessins dans lesquels :
- la figure 1 illustre une vue schématique d'un véhicule automobile équipé d'un système de nettoyage selon l'invention comprenant un bus de courant porteur en ligne et un bus de distribution hydraulique accolés l'un à l'autre et parcourant le véhicule pour distribuer respectivement de l'alimentation et des instructions de commande, et un produit nettoyant, à des dispositifs de projection du système de nettoyage montés sur ce même véhicule,
- la figure 2 illustre une vue schématique d'une paroi du véhicule logeant un connecteur hydraulique pour relier deux portions du bus de courant porteur en ligne et deux portions du bus de distribution hydraulique,
- la figure 3 illustre une vue schématique d'un mode de réalisation de l'invention dans lequel un des dispositifs de projection de produit nettoyant est relié, d'une part, hydrauliquement au bus de distribution hydraulique et, d'autre part, électriquement à un bus de courant porteur en ligne, le bus de distribution hydraulique et le bus de courant porteur en ligne étant distincts l'un de l'autre,
- la figure 4 illustre une vue schématique d'un autre mode de réalisation de l'invention dans lequel le bus de distribution hydraulique et le bus de courant porteur en ligne forment un même bus de distribution électrique et hydraulique,
- la figure 5 illustre une vue schématique d'une section du bus de distribution électrique et hydraulique illustré à la figure 4, coupé au niveau d'un organe de raccordement électrique.

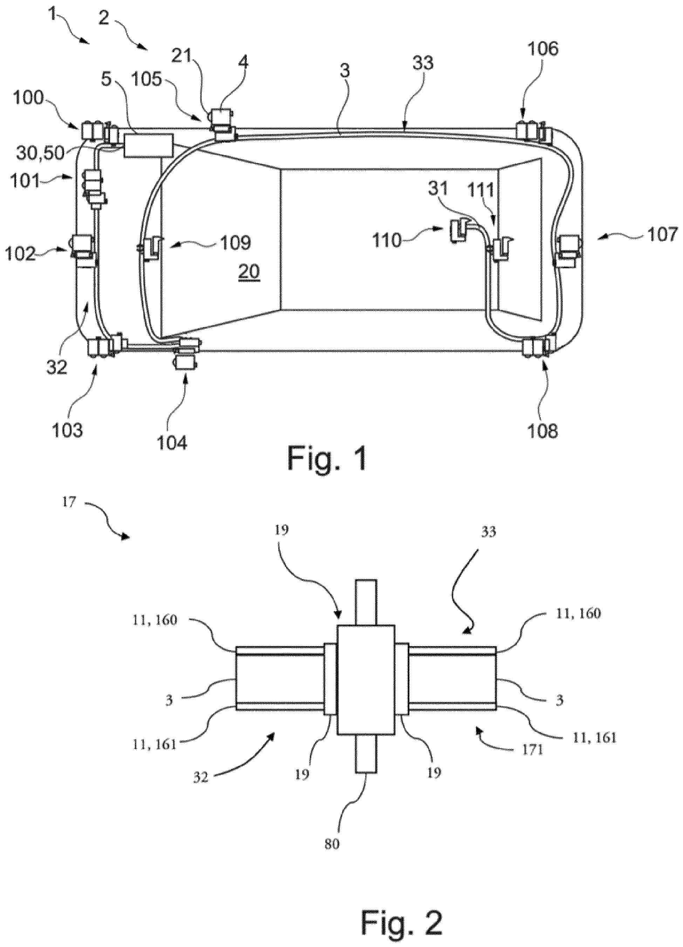

A la figure 1, on a représenté un véhicule 1 automobile équipé d'un système de nettoyage 2 selon l'invention, qui permet le nettoyage d'au moins une surface vitrée 20, 21 du véhicule 1. Une telle surface vitrée peut être par exemple un pare-brise 20 ou bien une lunette arrière du véhicule, ou elle peut être une surface optique 21 d'un système de détection optique 4 équipant le véhicule 1.

Le système de nettoyage 2 comprend des dispositifs de projection 100 à 111 du produit nettoyant disposés dans le véhicule 1 pour être associés respectivement au nettoyage d'une surface vitrée 20, 21, et au moins un bus de courant porteur en ligne 11 apte à permettre l'alimentation en courant et la transmission d'instruction de commande à chacun de ces dispositifs de projection. Dans l'exemple illustré, un dispositif de projection est spécifiquement dédié au nettoyage d'une unique surface vitrée, mais on comprendra que plusieurs dispositifs de projection pourraient être dédiés au nettoyage d'une même surface vitrée, par exemple le pare-brise 20, sans sortir du contexte de l'invention dès lors qu'un bus de courant porteur en ligne 11 est agencé à travers le véhicule et qu'une pluralité de ces dispositifs de projection sont raccordés à ce bus d'alimentation et de communication.

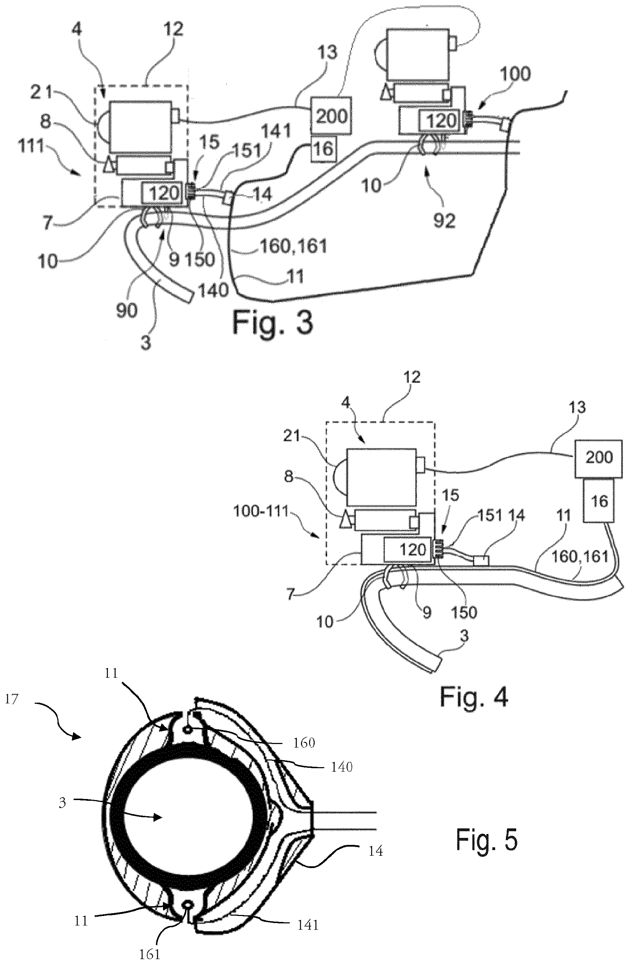

Plus particulièrement, selon l'invention, chacun des dispositifs de projection 100 à 111 est relié par des organes de raccordement électriques 14 au bus de courant porteur en ligne 11, et ces dispositifs de projection sont connectés à ce bus commun de manière indépendante l'un de l'autre, et dans des zones distinctes et successives 90, 92 (visibles sur la figure 3) du bus commun. Dans ce mode de réalisation non limitatif, on comprendra qu'un unique bus de courant porteur en ligne assure l'alimentation et la commande de l'ensemble des dispositifs de projection 100 à 111 montés sur ce véhicule 1.

Les moyens mis en oeuvre pour le raccordement électrique des dispositifs de projection à un bus d'alimentation et de communication commun seront décrits plus en détails ci-après.

En référence à la figure 1, il convient également de noter que les dispositifs de projection peuvent être raccordés hydrauliquement, indépendamment les uns des autres par l'intermédiaire d'organes de raccordement hydraulique, à un bus de distribution hydraulique commun 3.

Le système de nettoyage 2 comprend par ailleurs une pompe 5 et un réservoir de stockage de produit nettoyant. La pompe 5 est configurée pour récupérer le produit nettoyant dans le réservoir de stockage et pour alimenter le conduit principal hydraulique de manière continu en produit nettoyant. Plus particulièrement, une sortie 50 de la pompe 5 est reliée à une première extrémité 30 du bus de distribution hydraulique 3. Il en résulte que le bus de distribution hydraulique 3 s'étend le long du véhicule depuis cette première extrémité 30 jusqu'à une deuxième extrémité 31. Dans l'exemple illustré, la deuxième extrémité 31 du bus de distribution hydraulique 3, opposée à la première extrémité 30, est fermée de sorte que le bus de distribution hydraulique 3 forme un circuit hydraulique ouvert. Bien entendu, le bus de distribution hydraulique pourrait être configuré de manière à former un circuit hydraulique fermé et la deuxième extrémité 31 du bus de distribution hydraulique pourrait dans ce contexte être reliée au réservoir de stockage.

En se référant à la figure 1, des premiers dispositif de projection 100 à 108 sont destinés à nettoyer une surface optique d'un capteur servant à une analyse automatique de la scène de route, c'est-à-dire une analyse par l'électronique du véhicule pour notamment le pilotage d'un dispositif d'aide à la conduite et/ou à la manœuvre de ce véhicule, et des deuxièmes dispositifs de projection 109 à 111 sont destinés à nettoyer une surface vitrée de l'habitacle ou une surface optique d'un capteur servant uniquement à l'analyse directe par le conducteur du véhicule. Le bus de distribution hydraulique 3 est configuré dans ce cas pour que ce soit l'un des deuxièmes dispositifs de projection, ici un dispositif associé au nettoyage de la lunette arrière, qui soit disposé en bout du bus de distribution hydraulique, au niveau de sa deuxième extrémité 31, c'est-à-dire dans la zone du bus de distribution la plus éloignée de la sortie 50 de la pompe 5.

Selon l'invention, le bus de courant porteur en ligne 11 est disposé dans le véhicule pour distribuer du courant et des instructions de commande à chaque dispositif de projection, et pour des raisons de simplification de montage et de diminution des coûts, le bus de courant porteur en ligne 11 court avantageusement le long du bus de distribution hydraulique, tel que cela sera notamment décrit plus en détails en référence aux figures 4 et 5.

Le bus de distribution hydraulique 3 et le bus de courant porteur en ligne 11 présentent ici respectivement une première portion 32 agencée dans la partie avant du véhicule, et une deuxième portion 33 agencée dans l'habitacle, chaque portion serpentant dans la partie du véhicule correspondante pour distribuer l'ensemble des dispositifs de projection présents dans cette partie du véhicule. On comprend qu'une continuité hydraulique est ici réalisée entre ces deux portions 32, 33 puisqu'une unique pompe 5 est prévue sur le bus de distribution.

A la figure 2, on a représenté un moyen d'assurer la continuité entre ces portions 32, 33 lorsque les bus 3, 11 sont amenés à traverser une ou plusieurs paroi(s) 80 du véhicule 1, ceci avantageusement pour optimiser le parcours des bus dans le véhicule 1 et ainsi réduire la longueur nécessaire pour la réalisation de ces bus communs à chaque dispositif de projection. Dans ce cas, les portions 32, 33 sont reliées par paires l'une à l'autre via un connecteur hydraulique et électrique 19. Plus particulièrement, une première portion 32 et une deuxième portion 33 des bus 3, 11 portent chacune à leur extrémité en regard un port de connexion hydraulique et électrique pour leur raccordement au connecteur 16. Il peut être prévu que deux dispositifs de projection 100 à 111 soient reliés à une même portion 32, 33 des bus de distribution hydraulique 3 et de commande électrique 11 ou chacun à une portion 32, 33 différente des bus 3, 11.

En se référant à la figure 3, on va maintenant décrire plus en détail les dispositifs de projection 100 à 111 du système de nettoyage 2 et leur coopération avec le bus de courant porteur en ligne 11 commun à au moins deux de ces dispositifs de projection, tel qu'ils ont été représentés schématiquement sur cette figure 3. Dans ce qui va suivre, il est prévu que les dispositifs de projection présentent tous la même forme pour faciliter la standardisation du système de nettoyage, mais on pourra bien évidemment ajuster au besoin la forme et la dimension d'un dispositif de nettoyage sans sortir du contexte de l'invention, dès lors que conformément à ce qui a été décrit précédemment, chaque dispositif de projection est raccordé électriquement sur le bus commun de manière indépendante des autres dispositifs de projection.

Un dispositif de projection 100 à 111 comprend au moins un module électronique de commande 120, une électrovanne 7 et un gicleur 8. Lorsque l'électrovanne 7 est alimentée et actionnée, c'est-à-dire lorsqu'elle a reçu une instruction de commande en ce sens par l'intermédiaire du module électronique de commande 120, elle autorise le passage du produit nettoyant circulant dans le bus de distribution hydraulique 3 vers le gicleur 8. Le produit nettoyant est alors projeté par le gicleur 8 sur une surface vitrée 20, 21 du système de détection optique 4 associé au dispositif de projection 100 à 111. La position du gicleur 8 avant projection du produit nettoyant peut être ajustée par l'intermédiaire de consignes de déplacement générées par le module électronique de commande.

Le dispositif de projection comprend un organe de raccordement hydraulique 9 pour son raccordement au bus de distribution hydraulique 3. L'organe de raccordement hydraulique 9 présente une forme susceptible d'une part de percer le bus de distribution hydraulique 3 et susceptible d'autre part d'assurer le passage du produit nettoyant depuis ce bus de distribution vers le gicleur 8. A cet effet, l'organe de raccordement peut présenter la forme tubulaire et effilée d'une seringue. A l'assemblage de l'organe de raccordement hydraulique 9 sur le bus de distribution hydraulique 3, une résine peut être utilisée pour entourer une zone de contact entre l'organe de raccordement hydraulique 9 et le bus de distribution hydraulique 3, ceci pour assurer une étanchéité de cette zone de contact.

Selon l'invention, et tel que cela est visible sur la figure 3, deux dispositifs de projection 100 à 111 sont agencés successivement le long du bus commun de distribution hydraulique 3 pour y être raccordé par l'intermédiaire de ces organes de raccordement hydraulique 9 dans des zones distinctes successives. Chaque dispositif de projection vient ainsi se piquer sur le bus de distribution hydraulique commun au fur et à mesure du déploiement de ce bus de distribution hydraulique dans le véhicule.

Le dispositif de projection comprend un organe de maintien mécanique 10 permettant la fixation sur le bus de distribution hydraulique 3. Dans l'exemple illustré, l'organe de maintien mécanique 10 prend la forme d'une pince venant entourer au moins partiellement le conduit principal hydraulique participant à former le bus de distribution hydraulique 3 commun à la pluralité de dispositifs de projection 100 à 111. On pourra par exemple prévoir un organe de maintien à déformation élastique, définissant dans sa position d'origine une gorge de dimensions sensiblement inférieures à celle du conduit définissant le bus de distribution, l'opérateur ayant alors à forcer l'organe de raccordement à se déformer pour pouvoir venir en prise sur le bus de distribution hydraulique, et le rappel élastique de l'organe de raccordement assurant le maintien en position sur le bus.

A la figure 3, on a représenté deux dispositifs de projection comportant ces organes de raccordement hydraulique et ces organes de maintien mécanique coopérant avec le bus de distribution hydraulique 3.

Selon l'invention, et quelle que soit la façon dont les dispositifs sont raccordés hydrauliquement, sur un bus de distribution hydraulique commun ou non, et tel que cela est visible pour les deux dispositifs de projection représentés sur la figure 3, chaque dispositif de projection est relié au bus de courant porteur en ligne 11 par l'intermédiaire d'un organe de raccordement électrique 14, indépendamment du raccordement électrique, sur ce même bus de courant porteur en ligne, du dispositif de projection voisin. Les dispositifs de projection sont raccordés électriquement dans des zones de raccordement distinctes les unes des autres et agencées à distance le long du bus de courant porteur en ligne.

Le bus de courant porteur en ligne 11 est relié électriquement à une unité électronique principale 200, configurée notamment pour coder le courant d'alimentation amené à circuler dans le bus de courant porteur en ligne, de manière à faire porter par ce courant d'alimentation des instructions de commande pour le dispositif de projection, et notamment des instructions de fonctionnement de l'électrovanne 7.

On va décrire par la suite un dispositif de projection associé à un système de détection optique de type capteur optique, étant entendu que les caractéristiques relatives au raccordement hydraulique et électrique des dispositifs de projection sur un bus commun peuvent être reproduites pour un dispositif de projection destiné à nettoyer une surface vitrée tel que le pare-brise ou la lunette arrière.

Le dispositif de projection peut être logé dans un boîtier 12, tel qu'illustré schématiquement sur la figure 3. Le boîtier 12 comprend par ailleurs un système de détection optique 4 qui présente une surface vitrée que le dispositif de projection 100 à 111 associé doit nettoyer. Un tel système de détection optique 4 équipant le véhicule 1 peut être une caméra vidéo ou encore un scanner laser nécessaire pour permettre le fonctionnement d'un dispositif d'aide à la conduite et/ou à la manœuvre du véhicule 1.

Lorsqu'un dispositif de projection 100 à 111 est associé à un tel système de détection optique 4, ce dernier est configuré pour communiquer via un câble de connexion électrique 13, distinct du bus de courant porteur en ligne 11 des dispositifs de projection 100 à 111, avec une unité électronique principale 200 équipant ce véhicule 1. A titre d'exemple, lorsque le système de détection optique 4 est une caméra, ce câble de connexion électrique 13 permet de transmettre un signal vidéo à l'unité électronique principale 200.

Tel que cela a été précisé précédemment, et tel qu'illustré plus en détails sur les figures 3 et 4, le dispositif de projection comporte au moins une électrovanne 7, un gicleur 8, le module électronique de commande 120 pour la commande du dispositif de projection et notamment de l'électrovanne, ainsi qu'une borne de connexion électrique 15 configurée pour permettre le raccordement du dispositif de projection, et notamment du module électronique de commande et/ou de l'électrovanne, au bus de courant porteur en ligne 11 au niveau d'un connecteur embarqué sur le bus de courant porteur en ligne 11, formant organe de raccordement électrique 14. De la sorte, on réalise un raccordement du dispositif de projection en dérivation du réseau d'alimentation et de communication qui continue par ailleurs à circuler dans le véhicule jusqu'au prochain connecteur et au prochain dispositif de projection associé. L'organe de raccordement électrique 14 consiste en une dérivation du bus de courant porteur en ligne 11, par laquelle sortent deux brins 140, 141 susceptibles d'être reliés à une première broche 151 et une deuxième broche 152 de la borne de connexion électrique 15 de l'électrovanne 7. Chaque brin est ainsi issu du bus de courant porteur en ligne, formant partie du réseau d'alimentation 16 du véhicule, pour le raccordement électrique de l'électrovanne à un pôle positif 160, pour une tension préférentiellement égale à 12 V, et un pôle nul 161 pour la mise à la masse.

La spécificité du courant porteur en ligne circulant dans le bus commun 11 pour alimenter respectivement chacun des dispositifs de projection permet de transmettre aux modules électroniques de commande associés aux électrovannes dans chaque dispositif de projection des instructions de fonctionnement par superposition au courant passant un signal à fréquence modulée.

Dès qu'un des dispositifs de projection doit être mis en oeuvre, suite à la détection de dépassement d'un seuil de saleté de la surface vitrée associée, l'unité électronique principale 200 code le courant passant dans le bus 11 pour propager un signal à fréquence modulée le long du bus, à destination des dispositifs de projection. Chaque dispositif de projection voit passer ce signal à fréquence modulée et seul le dispositif de projection à qui est destiné ce signal le prend en considération, le codage étant propre à chaque dispositif de projection.

En d'autres termes, l'unité électronique de pilotage d'une électrovanne 7 est reliée électriquement à la borne de connexion électrique 15. Cette unité électronique de pilotage est programmée pour analyser en continu les données transmises par le bus de courant porteur en ligne 11. Lorsque cette unité électronique de pilotage identifie une instruction émise par l'unité électronique principale 200, transmise via le bus de courant porteur en ligne 11 et qui lui est dédiée, par exemple une instruction de commande en ouverture de l'électrovanne 7, elle actionne l'électrovanne 7 qui lui est associée et l'autorise ainsi à diriger le produit nettoyant contenu dans le bus de distribution hydraulique 3 vers le gicleur 8 correspondant.

Le dispositif de projection récupère alors autant de produit nettoyant qu'il est nécessaire pour le nettoyage de la surface vitrée associée, c'est-à-dire la quantité de produit nettoyant passant par l'électrovanne le temps de son actionnement par l'unité électronique de pilotage.

A la figure 4, on a représenté schématiquement le bus de distribution hydraulique 3 et le bus de courant porteur en ligne 11 formant un unique bus de distribution 17 électrique et hydraulique, qui conformément à ce qui a été précédemment décrit, est configuré pour desservir une pluralité de dispositifs de projection 100 à 111. Tel que représenté, le bus de courant porteur en ligne 11 est formé conjointement avec le bus de distribution hydraulique 3. A la figure 5, on a représenté une section de ce bus de distribution 17 électrique et hydraulique, qui est ici formé de sorte que le bus de distribution hydraulique 3 prend la forme d'un tube extrudé à l'intérieur duquel s'écoule le produit nettoyant et qui porte sur sa périphérie au moins un conduit supplémentaire pour recevoir le bus de courant porteur en ligne 11, qui est de la sorte disposé de façon périphérique par rapport au bus de distribution hydraulique 3. Sur cette figure 5, on a par ailleurs l'organe de raccordement électrique 14 qui permet de rassembler les brins 140, 141 dérivés des pôles positif 160 et nul 161 du bus de courant porteur en ligne 11, et par la suite de permettre leur raccordement à la borne de connexion électrique 15 associée au dispositif de projection.

Dans une variante non illustrée, on pourra prévoir que le bus de courant porteur en ligne circule au centre du tube formant le bus de distribution hydraulique. Notamment, le tube peut être annulaire pour recevoir en son centre le bus de courant porteur en ligne. Dans cette configuration, tout comme dans celle qui précède, le bus de courant porteur en ligne peut jouer le rôle d'un fil résistif pour élever par conduction thermique la température du produit nettoyant à projeter, notamment dans des conditions de grand froid.

Lorsqu'un dispositif de projection 100 à 111 est relié hydrauliquement au bus de distribution hydraulique 3, l'organe de raccordement hydraulique 9 est avantageusement disposé sur le bus de distribution 17 électrique et hydraulique de sorte à ne pas endommager le bus de courant porteur en ligne 11.

On aura compris à la lecture de ce qui précède que le système de nettoyage selon l'invention est avantageux en ce qu'il comporte au moins deux dispositifs de nettoyage disposés à distance l'un de l'autre dans le véhicule et alimentés au moins électriquement par un bus de distribution électrique, du type bus de courant porteur en ligne, commun à ces dispositifs de nettoyage. Le bus de distribution est agencé à travers le véhicule pour amener à proximité des dispositifs de nettoyage l'électricité nécessaire au fonctionnement des électrovannes spécifiques à chacun de ces dispositifs de nettoyage ainsi que les commandes d'activation de ces électrovannes, et il est notable selon l'invention que ces dispositifs de nettoyage viennent puiser dans le courant et dans les informations circulant dans le bus commun pour leur fonctionnement, indépendamment des dispositifs de nettoyage aux alentours.

Bien entendu, les caractéristiques, les variantes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique ou pour différencier l'invention par rapport à l'état de la technique.

## Revendications

1. Système de nettoyage (2) d'au moins une surface vitrée (20, 21) de véhicule (1), comprenant au moins deux dispositifs de projection (100 à 111) d'un produit nettoyant sur une surface vitrée associée, les dispositifs de projection comportant chacun un module électronique de commande (120) configurée pour piloter le fonctionnement du dispositif de projection correspondant en fonction d'instructions de commande, **caractérisé en ce que** le système de nettoyage comporte un bus de courant porteur en ligne commun aux au moins deux dispositifs de projection (100 à 111), qui sont reliés électriquement au bus de courant porteur en ligne (11) indépendamment l'un de l'autre et dans des zones successives (90, 92) dudit bus de courant porteur en ligne.

2. Système de nettoyage (2) selon la revendication précédente, **caractérisé en ce qu'**au moins un des dispositifs de projection (100 à 111) est relié électriquement au bus de courant porteur en ligne (11) par l'intermédiaire d'un organe de raccordement électrique (14) agencé sur ledit bus.

3. Système de nettoyage (2) selon la revendication précédente, **caractérisé en ce que** chacun des dispositifs de projection comprend une borne de connexion électrique (15) configurée pour être reliée d'une part à un des organes de raccordement électrique (14) agencés sur le bus de courant porteur en ligne (11) et d'autre part au module électronique de commande.

4. Système de nettoyage (2) selon la revendication précédente, **caractérisé en ce que** la borne de connexion électrique (15) comporte deux broches (150, 151) d'alimentation électrique.

5. Système de nettoyage (2) selon la revendication précédente, **caractérisé en ce qu'**il comporte des paires de fils électriques (140, 141) dans lesquelles chaque fil relie respectivement une broche (150, 151) d'une des bornes de connexion et l'un des organes de raccordement électrique (14).

6. Système de nettoyage (2) selon l'une des revendications précédentes, **caractérisé en ce que** le module électronique de commande (120) est configuré pour analyser l'ensemble des instructions de commande passant par le bus de courant porteur en ligne (11) et pour récupérer dans cet ensemble la ou les instructions de commande correspondant à son dispositif de projection.

7. Système de nettoyage (2) selon la revendication précédente, **caractérisé en ce que** chacun des dispositifs de projection (100 à 111) comprend une électrovanne (7) et un gicleur (8), ladite électrovanne étant pilotée par le module électronique de commande (120).

8. Système de nettoyage (2) selon l'une quelconque des revendications précédentes, **caractérisé en ce qu'**au moins un des dispositifs de projection (100 à 111) est associé à un système de détection optique (4), le dispositif de protection et le système de détection optique associé étant logés dans un boîtier commun (12).

9. Système de nettoyage (2) selon l'une quelconque des revendications précédentes, **caractérisé en ce qu'**il comprend un bus de distribution hydraulique (3) apte à permettre la circulation du produit nettoyant, les au moins deux dispositifs de projection (100-111) étant reliés hydrauliquement au bus de distribution hydraulique (3) indépendamment l'un de l'autre.

10. Système de nettoyage (2) selon la revendication précédente, **caractérisé en ce qu'**au moins un des dispositifs de projection (100 à 111) comprend des organes de raccordement hydraulique (9) sur le bus de distribution hydraulique (3).

11. Système de nettoyage (2) selon la revendication 9 ou 10, **caractérisé en ce qu'**au moins un des dispositifs de projection (100 à 111) comprend des organes de maintien mécanique (10) sur le bus de distribution hydraulique (3).

12. Système de nettoyage (2) selon l'une quelconque des revendications 9 à 11, **caractérisé en ce que** le bus de courant porteur en ligne (11) et le bus de distribution hydraulique (3) forment un même bus de distribution (17) électrique et hydraulique des dispositifs de projection (100-111).

13. Système de nettoyage (2) selon la revendication précédente, **caractérisé en ce que** le bus de distribution (17) électrique et hydraulique comporte un tube extrudé présentant au centre du tube un canal central à l'intérieur duquel est susceptible de circuler le produit nettoyant et présentant sur la périphérie du tube des conduites à l'intérieur desquelles sont susceptibles de circuler chacun des brins d'alimentation du bus de courant porteur en ligne.

14. Système de nettoyage (2) selon la revendication 12, **caractérisé en ce que** le bus de distribution (17) électrique et hydraulique comporte un tube à l'intérieur duquel est susceptible de circuler le produit nettoyant et l'intérieur duquel s'étend également le bus de courant porteur en ligne (11).

15. Système de nettoyage (2) selon l'une quelconque des revendications 6 à 8, **caractérisé en ce que** le bus de distribution (17) électrique et hydraulique comprend au moins deux portions (32, 33) reliées l'une à l'autre par un connecteur hydraulique et électrique (6).

## Patentansprüche

1. System zur Reinigung (2) wenigstens einer Glasfläche (20, 21) eines Fahrzeugs (1), welches wenigstens zwei Vorrichtung zum Spritzen (100 bis 111) eines Reinigungsmittels auf eine zugeordnete Glasfläche umfasst, wobei die Spritzvorrichtungen jeweils ein elektronisches Steuermodul (120) aufweisen, das dafür ausgelegt ist, den Betrieb der entsprechenden Spritzvorrichtung in Abhängigkeit von Steueranweisungen zu steuern,
**dadurch gekennzeichnet, dass** das Reinigungssystem einen Powerline Communications Bus aufweist, der den wenigstens zwei Spritzvorrichtungen (100 bis 111) gemeinsam ist, welche mit dem Powerline Communications Bus (11) unabhängig voneinander und in aufeinander folgenden Bereichen (90, 92) des Powerline Communications Bus verbunden sind.

2. Reinigungssystem (2) nach dem vorhergehenden Anspruch, **dadurch gekennzeichnet, dass** wenigstens eine der Spritzvorrichtungen (100 bis 111) mit dem Powerline Communications Bus (11) über ein elektrisches Anschlussorgan (14), das an dem Bus angeordnet ist, elektrisch verbunden ist.

3. Reinigungssystem (2) nach dem vorhergehenden Anspruch, **dadurch gekennzeichnet, dass** jede der Spritzvorrichtungen eine elektrische Anschlussklemme (15) umfasst, die dafür ausgelegt ist, einerseits mit einem der elektrischen Anschlussorgane (14), die an dem Powerline Communications Bus (11) angeordnet sind, und andererseits mit dem elektronischen Steuermodul verbunden zu werden.

4. Reinigungssystem (2) nach dem vorhergehenden Anspruch, **dadurch gekennzeichnet, dass** die elektrische Anschlussklemme (15) zwei Kontaktstifte (150, 151) zur Stromversorgung aufweist.

5. Reinigungssystem (2) nach dem vorhergehenden Anspruch, **dadurch gekennzeichnet, dass** es Paare von Leitungsdrähten (140, 141) aufweist, wobei jeder Draht jeweils einen Kontaktstift (150, 151) einer der Anschlussklemmen und eines der elektrischen Anschlussorgane (14) verbindet.

6. Reinigungssystem (2) nach einem der vorhergehenden Ansprüche, **dadurch gekennzeichnet, dass** das elektronische Steuermodul (120) dafür ausgelegt ist, die Gesamtheit der Steueranweisungen zu analysieren, die den Powerline Communications Bus (11) durchlaufen, und aus dieser Gesamtheit die Steueranweisung oder Steueranweisungen zu entnehmen, die seiner Spritzvorrichtung entspricht bzw. entsprechen.

7. Reinigungssystem (2) nach dem vorhergehenden Anspruch, **dadurch gekennzeichnet, dass** jede der Spritzvorrichtungen (100 bis 111) ein Magnetventil (7) und eine Spritzdüse (8) umfasst, wobei das Magnetventil von dem elektronischen Steuermodul (120) gesteuert wird.

8. Reinigungssystem (2) nach einem der vorhergehenden Ansprüche, **dadurch gekennzeichnet, dass** wenigstens eine der Spritzvorrichtungen (100 bis 111) einem optischen Detektionssystem (4) zugeordnet ist, wobei die Spritzvorrichtung und das zugeordnete optische Detektionssystem in einem gemeinsamen Gehäuse (12) untergebracht sind.

9. Reinigungssystem (2) nach einem der vorhergehenden Ansprüche, **dadurch gekennzeichnet, dass** es einen hydraulischen Verteilerbus (3) umfasst, der geeignet ist, die Zirkulation des Reinigungsmittels zu ermöglichen, wobei die wenigstens zwei Spritzvorrichtungen (100-111) unabhängig voneinander mit dem hydraulischen Verteilerbus (3) hydraulisch verbunden sind.

10. Reinigungssystem (2) nach dem vorhergehenden Anspruch, **dadurch gekennzeichnet, dass** wenigstens eine der Spritzvorrichtungen (100 bis 111) Organe zum hydraulischen Anschluss (9) an den hydraulischen Verteilerbus (3) umfasst.

11. Reinigungssystem (2) nach Anspruch 9 oder 10, **dadurch gekennzeichnet, dass** wenigstens eine der Spritzvorrichtungen (100 bis 111) Organe zum mechanischen Halten (10) an dem hydraulischen Verteilerbus (3) umfasst.

12. Reinigungssystem (2) nach einem der Ansprüche 9 bis 11, **dadurch gekennzeichnet, dass** der Powerline Communications Bus (11) und der hydraulische Verteilerbus (3) ein und denselben elektrischen und hydraulischen Verteilerbus (17) der Spritzvorrichtungen (100-111) bilden.

13. Reinigungssystem (2) nach dem vorhergehenden Anspruch, **dadurch gekennzeichnet, dass** der elektrische und hydraulische Verteilerbus (17) ein extrudiertes Rohr umfasst, das in der Mitte des Rohres einen zentralen Kanal aufweist, in dessen Innerem das Reinigungsmittel zirkulieren kann, und das auf dem Umfang des Rohres Rohrleitungen aufweist, in deren Innerem jeweils eine der Speiseadern des Powerline Communications Bus verlaufen kann.

14. Reinigungssystem (2) nach Anspruch 12, **dadurch gekennzeichnet, dass** der elektrische und hydraulische Verteilerbus (17) ein Rohr umfasst, in dessen Innerem das Reinigungsmittel zirkulieren kann und in dessen Innerem sich auch der Powerline Communications Bus (11) erstreckt.

15. Reinigungssystem (2) nach einem der Ansprüche 6 bis 8, **dadurch gekennzeichnet, dass** der elektrische und hydraulische Verteilerbus (17) mindestens zwei Abschnitte (32, 33) umfasst, die durch einen hydraulischen und elektrischen Verbinder (6) miteinander verbunden sind.

## Claims

1. System (2) for cleaning at least one glazed surface (20, 21) of a vehicle (1), comprising at least two devices (100 to 111) for projecting a cleaning product onto an associated glazed surface, the projection devices each including an electronic control module (120) configured to drive the operation of the corresponding projection device depending on control instructions, **characterized in that** the cleaning system includes a powerline bus common to the at least two projection devices (100 to 111), which are linked electrically to the powerline bus (11) independently of one another and in successive areas (90, 92) of said powerline bus.

2. Cleaning system (2) according to the preceding claim, **characterized in that** at least one of the projection devices (100 to 111) is linked electrically to the powerline bus (11) by way of an electrical connection element (14) arranged on said bus.

3. Cleaning system (2) according to the preceding claim, **characterized in that** each of the projection devices comprises an electrical connection terminal (15) configured to be linked to one of the electrical connection elements (14) arranged on the powerline bus (11), on the one hand, and to the electronic control module, on the other hand.

4. Cleaning system (2) according to the preceding claim, **characterized in that** the electrical connection terminal (15) comprises two electric power supply pins (150, 151).

5. Cleaning system (2) according to the preceding claim, **characterized in that** it includes pairs of electrical wires (140, 141) in which each wire respectively links one pin (150, 151) of one of the connection terminals and one of the electrical connection elements (14).

6. Cleaning system (2) according to one of the preceding claims, **characterized in that** the electronic control module (120) is configured to analyse all of the control instructions flowing through the powerline bus (11) and to recover therefrom the control instruction(s) corresponding to its projection device.

7. Cleaning system (2) according to the preceding claim, **characterized in that** each of the projection devices (100 to 111) comprises a solenoid valve (7) and a sprinkler (8), said solenoid valve being driven by the electronic control module (120).

8. Cleaning system (2) according to any one of the preceding claims, **characterized in that** at least one of the projection devices (100 to 111) is associated with an optical detection system (4), the projection device and the associated optical detection system being housed in a common housing (12).

9. Cleaning system (2) according to any one of the preceding claims, **characterized in that** it comprises a hydraulic distribution bus (3) able to allow the cleaning product to flow, the at least two projection devices (100-111) being linked hydraulically to the hydraulic distribution bus (3) independently of one another.

10. Cleaning system (2) according to the preceding claim, **characterized in that** at least one of the projection devices (100 to 111) comprises elements (9) for hydraulic connection to the hydraulic distribution bus (3).

11. Cleaning system (2) according to Claim 9 or 10, **characterized in that** at least one of the projection devices (100 to 111) comprises elements (10) for mechanical holding on the hydraulic distribution bus (3).

12. Cleaning system (2) according to any one of Claims 9 to 11, **characterized in that** the powerline bus (11) and the hydraulic distribution bus (3) form one and the same electric and hydraulic distribution bus (17) for the projection devices (100-111).

13. Cleaning system (2) according to the preceding claim, **characterized in that** the electric and hydraulic distribution bus (17) includes an extruded tube having, in the centre of the tube, a central channel within which the cleaning product is able to flow and that has, on the periphery of the tube, lines within which each of the power supply wires of the powerline bus are able to run.

14. Cleaning system (2) according to Claim 12, **characterized in that** the electric and hydraulic distribution bus (17) includes a tube within which the cleaning product is able to flow and within which the powerline bus (11) also extends.

15. Cleaning system (2) according to any one of Claims 6 to 8, **characterized in that** the electric and hydraulic distribution bus (17) comprises at least two portions (32, 33) that are linked to one another by a hydraulic and electrical connector (6).
